# EUROPEAN PATENT APPLICATION

(11) **EP 4 848 104 A1**
(43) Date of publication of application: **02.12.2026**
(21) Application number: 24925527.4
(22) Date of filing: 14.10.2024
(51) Int. Cl.: G06F 16/40

(54) **MEDIA FILE PROCESSING METHOD AND APPARATUS**

(30) Priority: 22.02.2024 CN 202410199717
(71) Applicant: Huawei Technologies Co., Ltd., Shenzhen, Guangdong 518129 (CN)
(72) Inventor: TONG, Anping, Shenzhen, Guangdong 518129 (CN); SHI, Jun, Shenzhen, Guangdong 518129 (CN); ZHANG, Long, Shenzhen, Guangdong 518129 (CN)
(74) Representative: Goddar, Heinz J.
(86) International application number: PCT/CN2024/124629
(87) International publication number: WO 2025/175789

(57) **Abstract**

Embodiments of this application relate to the field of chip technologies, and provide a media file processing method and apparatus, to reduce computation overheads in a softmax operation in an attention layer and memory access overheads during computation. A specific solution is as follows: A query matrix, a key matrix, and a value matrix may be obtained based on an input matrix obtained based on a media file, block-wise computation is performed on the query matrix, the key matrix, and the value matrix, and on-the-fly softmax processing is performed on row blocks of the query matrix and column blocks of a transposed matrix of the key matrix. Embodiments of this application are applicable to computation at the attention layer.

## Description

This application claims priority to Chinese Patent Application No. 202410199717.7, filed with the China National Intellectual Property Administration on February 22, 2024 and entitled "MEDIA FILE PROCESSING METHOD AND APPARATUS", which is incorporated herein by reference in its entirety.

### TECHNICAL FIELD

Embodiments of this application relate to the field of chip technologies, and in particular, to a media file processing method and apparatus.

### BACKGROUND

With the continuous development of artificial intelligence (artificial intelligence, AI) technologies, large language models (large language models, LLMs) and diffusion models have attracted increasing attention.

The large language models and the diffusion models may implement human-machine interaction through natural language. A system may identify specific meanings of natural-language sentences by extracting key information from the sentences. In addition, the large language models and the diffusion models may further implement image classification. Attention features of target images are obtained by performing a series of processing on the target images, and then a classification result of the target images is obtained based on the attention features of the target images.

Currently, the large language models and the diffusion models include a large quantity of attention (attention) layer models. A formula of an attention layer may be expressed as $Attention \left(Q, K, V\right) = softmax \left(\frac{Q \times {K}^{T}}{\sqrt{d}}\right) \times V$ , where Q is a query (query) matrix, K is a key (key) matrix, and V is a value (value) matrix. Operator computation of the attention layer models is complex, and includes a large quantity of matrix multiplication operations. Access to a memory is involved in the matrix multiplication operations, which requires high memory access overheads. Consequently, system power consumption is increased.

### SUMMARY

Embodiments of this application provide a media file processing method and apparatus, to reduce computation overheads of performing a softmax operation in an attention layer by the media file processing apparatus and memory access overheads during computation.

To achieve the foregoing objective, the following technical solutions are used in embodiments of this application.

According to a first aspect, an embodiment of this application provides a media file processing method. The method includes: encoding a media file to obtain an input matrix, and obtaining a query matrix, a key matrix, and a value matrix based on the input matrix; sequentially performing operations on a plurality of row blocks of the query matrix and a plurality of column blocks of a transposed matrix of the key matrix respectively, to obtain a plurality of first intermediate matrices; each time a first intermediate matrix is obtained, determining a maximum value between an element in the obtained first intermediate matrix and a maximum value that is previously stored in a first buffer, and storing the determined maximum value in the first buffer, where a (j+1)^{th} maximum value overwrites a (j-1)^{th} maximum value stored in the first buffer, and j is an integer greater than 1; sequentially obtaining a plurality of probability matrices based on the first intermediate matrices and determined maximum values, and storing the obtained probability matrices in a second buffer, where a (j+1)^{th} probability matrix overwrites a (j-1)^{th} probability matrix stored in the second buffer; and each time a probability matrix is obtained, determining a current output matrix based on the obtained probability matrix, a row block of the value matrix, and a previously obtained output matrix, to obtain a target output matrix, where an element in the target output matrix represents an attention feature of the media file, and a (j+1)^{th} output matrix overwrites a (j-1)^{th} output matrix stored in the second buffer.

Therefore, in the media file processing method provided in this embodiment of this application, the query matrix, the key matrix, and the value matrix may be obtained based on the input matrix obtained based on the media file, block-wise computation is performed on the query matrix, the key matrix, and the value matrix, and on-the-fly softmax processing is performed on row blocks of the query matrix and column blocks of a transposed matrix of the key matrix, so that computation overheads in a softmax operation can be reduced. In addition, compared with a method in which a complete probability matrix needs to be accessed in a process of computation at an attention layer, in the method provided in this embodiment of this application, the (j+1)^{th} probability matrix may be used to overwrite the (j-1)^{th} probability matrix, and the (j+1)^{th} output matrix may be used to overwrite the (j-1)^{th} output matrix. In this case, in this method, a small storage space may be used to store probability matrices and output matrices, that is, the probability matrices and the output matrices may be stored in a buffer with a higher rate, and the probability matrices and the output matrices do not need to be stored in an external memory. This reduces memory access overheads in the process of computation at the attention layer, and improves computational efficiency.

In a possible design, determining the current output matrix based on the obtained probability matrix, the row block of the value matrix, and the previously obtained output matrix includes: performing a matrix multiplication operation on the obtained probability matrix and the row block of the value matrix to obtain a second intermediate matrix, and obtaining the current output matrix based on the second intermediate matrix, a currently determined maximum value, a previously determined maximum value, and the previously obtained output matrix.

In a possible design, the method further includes: each time a probability matrix is obtained, obtaining a current accumulation matrix based on the obtained probability matrix and a previously obtained accumulation matrix, and calibrating the current accumulation matrix to obtain a current calibrated accumulation matrix.

In a possible design, the method further includes: when a last output matrix is obtained, calibrating the last output matrix based on a last accumulation matrix, to obtain the target output matrix.

In a possible design, sequentially performing the operations on the plurality of row blocks of the query matrix and the plurality of column blocks of the transposed matrix of the key matrix respectively, to obtain the plurality of first intermediate matrices includes: performing matrix multiplication operations on the row blocks of the query matrix and the column blocks of the transposed matrix of the key matrix, to obtain third intermediate matrices; and performing numerical conversion on elements in the third intermediate matrices to obtain the first intermediate matrices, where elements in the first intermediate matrices are fixed-point numbers. Therefore, numerical conversion is performed on the elements in the third intermediate matrices to obtain the first intermediate matrices whose elements are all fixed-point numbers, so that computation at an attention layer can be converted from a floating-point domain to a fixed-point domain, thereby further reducing a circuit area and power consumption.

In a possible design, a quantity of row blocks of the query matrix, a quantity of column blocks of the transposed matrix of the key matrix, and a quantity of row blocks of the value matrix are the same.

According to a second aspect, an embodiment of this application provides a media file processing apparatus. The apparatus includes a matrix multiplier, a comparator, a first buffer, an exponential computation unit, and a first calibration circuit. The matrix multiplier is configured to: encode a media file to obtain an input matrix, and obtain a query matrix, a key matrix, and a value matrix based on the input matrix. The matrix multiplier is further configured to sequentially perform operations on a plurality of row blocks of the query matrix and a plurality of column blocks of a transposed matrix of the key matrix respectively to obtain a plurality of first intermediate matrices. The comparator is configured to: each time a first intermediate matrix is obtained, determine a maximum value between an element in the obtained first intermediate matrix and a maximum value that is previously stored in a first buffer, and store the determined maximum value in the first buffer, where a (j+1)^{th} maximum value overwrites a (j-1)^{th} maximum value stored in the first buffer, and j is an integer greater than 1. The exponential computation unit is configured to: sequentially obtain a plurality of probability matrices based on the first intermediate matrices and determined maximum values, and store the obtained probability matrices in a second buffer, where a (j+1)^{th} probability matrix overwrites a (j-1)^{th} probability matrix stored in the second buffer. The first calibration circuit is configured to: each time a probability matrix is obtained, determine a current output matrix based on the obtained probability matrix, a row block of the value matrix, and a previously obtained output matrix, to obtain a target output matrix, where an element in the target output matrix represents an attention feature of the media file, and a (j+1)^{th} output matrix overwrites a (j-1)^{th} output matrix stored in the second buffer.

In a possible design, the first calibration circuit is specifically configured to: perform a matrix multiplication operation on the obtained probability matrix and the row block of the value matrix, to obtain a second intermediate matrix; and obtain the current output matrix based on the second intermediate matrix, a currently determined maximum value, a previously determined maximum value, and the previously obtained output matrix.

In a possible design, the media file processing apparatus further includes an adder, and the adder is configured to: each time a probability matrix is obtained, obtain a current accumulation matrix based on the obtained probability matrix and a previously obtained accumulation matrix, and calibrate the current accumulation matrix to obtain a current calibrated accumulation matrix.

In a possible design, the media file processing apparatus further includes a second calibration circuit, and the second calibration circuit is configured to: when a last output matrix is obtained, calibrate the last output matrix based on a last accumulation matrix, to obtain the target output matrix.

In a possible design, the matrix multiplier is specifically configured to: perform matrix multiplication operations on the row blocks of the query matrix and the column blocks of the transposed matrix of the key matrix, to obtain third intermediate matrices; and perform numerical conversion on elements in the third intermediate matrices to obtain the first intermediate matrices, where elements in the first intermediate matrices are fixed-point numbers.

In a possible design, a quantity of row blocks of the query matrix, a quantity of column blocks of the transposed matrix of the key matrix, and a quantity of row blocks of the value matrix are the same.

For beneficial effects of the second aspect, refer to the descriptions of the first aspect.

According to a third aspect, an embodiment of this application provides a chip system. The chip system includes a second buffer and the media file processing apparatus according to the second aspect. The second buffer is configured to store the probability matrices and output matrices. The (j+1)^{th} probability matrix overwrites the (j-1)^{th} probability matrix, the (j+1)^{th} output matrix overwrites the (j-1)^{th} output matrix, and j is an integer greater than 1.

According to a fourth aspect, an embodiment of this application provides an electronic device. The electronic device includes a processor and a memory, the memory is coupled to the processor, the memory is configured to store computer instructions, and the processor is configured to execute the computer instructions to implement the method according to any one of the first aspect.

According to a fifth aspect, an embodiment of this application provides a computer-readable storage medium, including computer instructions. When the computer instructions are run on an electronic device, the electronic device is enabled to perform the media file processing method according to any one of the foregoing aspects or the possible implementations.

According to a sixth aspect, an embodiment of this application provides a computer program product. When the computer program product runs on a computer or a processor, the computer or the processor is enabled to perform the media file processing method according to any one of the foregoing aspects or the possible implementations.

It may be understood that any media file processing apparatus, chip system, electronic device, computer-readable storage medium, computer program product, or the like provided above may be used in the corresponding method provided above. Therefore, for beneficial effects that can be achieved by the media file processing apparatus, the chip system, the electronic device, the computer-readable storage medium, the computer program product, or the like, refer to the beneficial effects in the corresponding method. Details are not described herein again.

These aspects or other aspects in this application are more concise and comprehensible in the following descriptions.

### BRIEF DESCRIPTION OF DRAWINGS

FIG. 1 is a flowchart of computation at an attention layer according to an embodiment of this application;
FIG. 2 is another flowchart of computation at an attention layer according to an embodiment of this application;
FIG. 3 is a flowchart of a media file processing method according to an embodiment of this application;
FIG. 4 is a diagram of a structure of a media file processing apparatus according to an embodiment of this application;
FIG. 5 is a diagram of a circuit structure of a media file processing apparatus according to an embodiment of this application;
FIG. 6 is a flowchart of another media file processing method according to an embodiment of this application;
FIG. 7 is a flowchart of computation in S601 according to an embodiment of this application;
FIG. 8 is a flowchart of computation in S602 according to an embodiment of this application;
FIG. 9 is a flowchart of computation in S603 according to an embodiment of this application;
FIG. 10 is a flowchart of computation in S604 according to an embodiment of this application;
FIG. 11 is a flowchart of computation in S605 according to an embodiment of this application; and
FIG. 12 is another flowchart of computation at an attention layer according to an embodiment of this application.

### DESCRIPTION OF EMBODIMENTS

For ease of understanding, some concepts related to embodiments of this application are described for reference by using examples. Details are as follows.
1. Softmax function: A computation formula of the softmax function is $softmax \left(x\right) = \frac{exp \left({x}_{i}-{x}_{max}\right)}{\sum exp \left({x}_{j}-{x}_{max}\right)}$, where "exp" represents an exponential operation with e as a base. Specifically, it is assumed that an input variable x=[x0, x1, ..., xn], and a computation process of the softmax function may include: (1) computing a maximum value xₘₐₓ in the input variable x; (2) computing a difference between each element xᵢ in the input variable x and the maximum value xₘₐₓ, performing an exp operation, and then summing operation results of all elements in x, that is, Σ *exp*(*xᵢ - xₘₐₓ*); and (3) computing a softmax value of each element in the input variable x, that is, computing the difference between each element xᵢ in x and the maximum value, performing an exp operation, and dividing, by a sum obtained in step (2), a value obtained through the exp operation, that is, ${s}_{i} = \frac{exp \left({x}_{i}-{x}_{max}\right)}{\sum exp \left({x}_{j}-{x}_{max}\right)}$. Therefore, an output variable s=[s0, s1, ..., sn] may be obtained, where s0+s1+...+sn=1. That is, the softmax function maps elements in the input variable to real numbers from 0 to 1, and performs normalization to ensure the sum is equal to 1. In an example of image classification, an element in an output variable corresponds to a probability that each classification is obtained.
2. Fixed-point number and floating-point number: The position of a decimal point in a fixed-point number is fixed and unchanged, whereas the position of a decimal point in a floating-point number is not fixed and may float.

The following describes the technical solutions in embodiments of this application with reference to the accompanying drawings in embodiments of this application. In the descriptions of embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

With the continuous development of artificial intelligence technologies, large language models and diffusion models attract increasing attention. The large language models and the diffusion models may implement functions such as human-machine interaction through natural language, image classification, target detection, image super-resolution reconstruction, and image restoration.

A typical model among the large language models is a transformer (transformer) model, and a self-attention (self-attention) mechanism is introduced in the transformer model. Specifically, the transformer model uses an encoder-decoder (encoder-decoder) architecture, and the transformer model may include a plurality of encoder layers and a plurality of decoder layers. For example, an input variable is text data. The text data may include a plurality of words. A process of the transformer model may include: (1) obtaining an input vector X of each word in the input text data, where the input vector X is obtained by adding word embedding (embedding) and positional embedding, where embedding is a feature (feature) extracted from the text data; (2) inputting the input variable X to the encoder layer to obtain an encoding information matrix; and (3) inputting the encoding information matrix to the decoder layer, where the decoder layer translates an (i+1)^{th} word based on first i words that have been translated, where each encoder layer may include a feedforward neural network and a self-attention layer, and in addition to a feedforward neural network and a self-attention layer, each decoder layer may further include an attention (attention) layer.

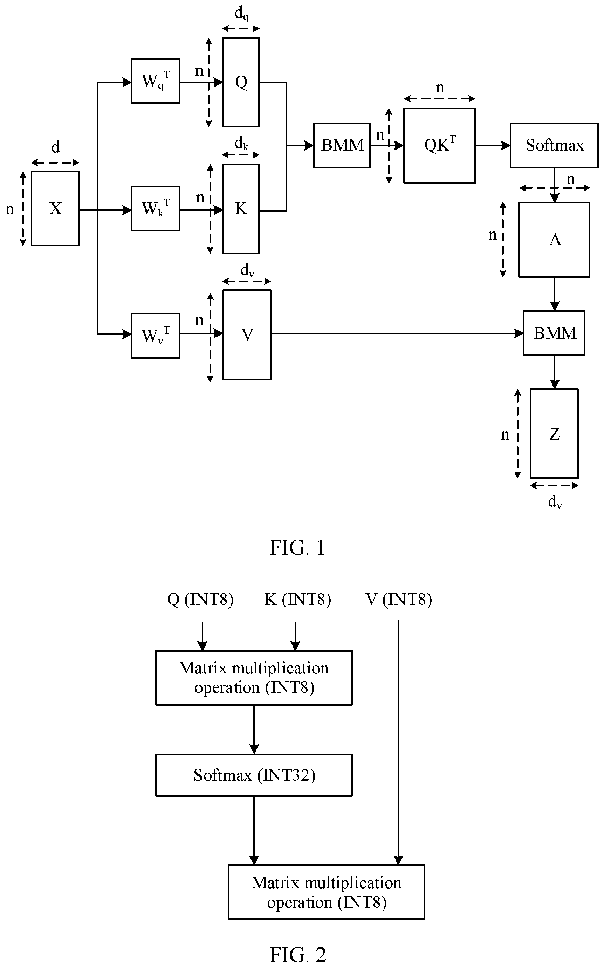

Specifically, a process of computation at the attention layer is shown in FIG. 1. FIG. 1 is a flowchart of computation at the attention layer according to an embodiment of this application. A formula at the attention layer may be described as $Attention \left(Q, K, V\right) = softmax \left(\frac{Q \times {K}^{T}}{\sqrt{d}}\right) \times V$, where Q is a query matrix, K is a key matrix, V is a value matrix, Q, K, and V may be obtained by respectively multiplying the input variable by transposed matrices of three different weight matrices (W_{q}, Wₖ, and Wᵥ), and $\sqrt{d}$ is used to normalize the attention layer to maintain gradient stability.

A quantity of tokens (tokens) of the input variable x is n, and a quantity of hidden dimensions (hidden dim) is d. A process of computation at the attention layer may include: (1) obtaining Q, K, and V respectively after the input variable x passes through three linear layers, where specifically, Q may be obtained by multiplying x by W_{q}^{T}, a quantity of rows of Q is n, and a quantity of columns of Q is d_{q}; K may be obtained by multiplying x by Wₖ^{T}, a quantity of rows of K is n, and a quantity of columns of K is dₖ; and V may be obtained by multiplying x by Wᵥ^{T}, a quantity of rows of V is n, and a quantity of columns of V is dᵥ; (2) performing a matrix multiplication (batched matrix multiplication, BMM) operation on the query matrix Q and the transposed matrix of the key matrix K, to obtain an attention map (attention map) matrix, namely, QK^{T}, where both a quantity of rows and a quantity of columns of QK^{T} are n; (3) performing softmax computation on the attention map matrix to obtain a probability matrix A, where both a quantity of rows and a quantity of columns of the probability matrix A are n; and (4) performing BMM on the probability matrix A and the value matrix V to obtain an output matrix Z, where a quantity of rows of the output matrix Z is n, and a quantity of columns of the output matrix Z is dᵥ.

It may be understood that, when the quantity of tokens in the input variable x increases, a size of the probability matrix A also increases. For example, when the quantity of tokens in x is 1024, the size of the probability matrix A is 1024 x 1024. When the quantity of tokens in x is 4096, the size of the probability matrix A is 4096×4096. If an element in the probability matrix A is stored in a form of a 16-bit floating-point number (float16), a storage space of 32M is required for storing the probability matrix A. Because the probability matrix A requires a large storage space, the probability matrix A usually cannot be stored in a high-speed buffer of a neural network processing unit (neural network processing unit, NPU), but needs to be written into an external memory, which brings great storage pressure. In addition, when a matrix multiplication operation is subsequently performed on the probability matrix A and the value matrix V, the probability matrix A needs to be read from the external memory, which causes large memory access overheads, and reduces performance and power consumption of a chip. In addition, as the size of the probability matrix A increases, a computation amount of the softmax function further increases.

To reduce the computation amount at the attention layer, a simplified method for the softmax function is provided. The simplified method includes three manners. Manner 1 is: in an original computation process of the softmax function, replacing exponential computation with e as a base with exponential computation with 2 as a base. Manner 2 is: on the basis of Manner 1, reducing a cyclic process. Specifically, the step of determining the maximum value in the input variable x and the step of computing the sum of the values of the elements in the input variable x after operations are combined, and only one cyclic process is used. Manner 3 is: on the basis of Manner 2, performing numerical conversion on the input variable. Therefore, exponential computation with 2 as the base may be implemented in a manner of table lookup and shifting.

However, all intermediate computation results in the foregoing three manners still need to be buffered in a memory, and are read from the memory when a next step of computation is performed. This still causes large memory access overheads, and causes extra performance overheads and hardware overheads. In addition, quantization bit widths of the input variable and the output variable in the foregoing three manners are low, and cannot meet computation precision of a neural network (neural network). Therefore, a neural network model may need to be retrained.

In addition, to improve the computation precision of the neural network, another softmax function computation method is provided. As shown in FIG. 2, FIG. 2 is another flowchart of computation at an attention layer according to an embodiment of this application. A matrix multiplication operation is performed on transposed matrices of Q and K in an INT8 domain, then a softmax operation is performed in an INT32 domain to obtain a probability matrix, and finally a matrix multiplication operation is performed on the probability matrix and V in the INT8 domain. Here, INT8 indicates an 8-bit signed number, and INT32 indicates a 32-bit signed number. Specifically, the computation method includes: computing a difference between an i^{th} element in an input variable x and a maximum value, to obtain x_{norm_j}, that is, *x*_{norm_i} = *xᵢ* - *xₘₐₓ*; performing numerical conversion on x_{norm_i}, that is, *x*_{norm_i} = (-*ln*2) * *u* + *v,* where u is an integer part, v is a fractional part, and a value range of v is (-ln2, 0]; computing a value with e as a base and v as an exponent, where *e^{v}* ≈ 0.3585 * (v + 1.353)² + 0.344; and then, computing the subsequent steps in the INT32 domain to obtain a softmax result.

However, an element in an attention map matrix obtained in the computation process needs to be stored in a form of INT32, which causes large storage pressure and causes extra performance overheads and hardware overheads.

Therefore, an embodiment of this application provides a media file processing method. In the method, block-wise computation is performed on a query matrix, a key matrix, and a value matrix, and on-the-fly softmax processing is performed on row blocks of the query matrix and column blocks of a transposed matrix of the key matrix, so that computation overheads in a softmax operation can be reduced. In addition, compared with a method in which a complete probability matrix needs to be accessed in a process of computation at an attention layer, in the method provided in this embodiment of this application, a (j+1)^{th} probability matrix may be used to overwrite a (j-1)^{th} probability matrix, and a (j+1)^{th} output matrix may be used to overwrite a (j-1)^{th} output matrix. In this case, in this method, a small storage space may be used to store probability matrices and output matrices, that is, the probability matrices and the output matrices may be stored in a buffer with a higher rate, and the probability matrices and the output matrices do not need to be stored in an external memory. This reduces memory access overheads in the process of computation at the attention layer, and improves computational efficiency.

A media file in embodiments of this application may be a media file like an image, a sound, or a text, or may be a media file of another type. This is not limited in this application.

For example, the media file is an image. The media file processing method provided in embodiments of this application can be applied to a plurality of scenarios such as image classification, target detection, super-resolution image reconstruction, and image restoration. For example, in the image classification scenario, a media file processing apparatus in this application classifies, by using the attention layer, images captured by using a data collection device (for example, a camera), to obtain an image classification result, and may further perform a corresponding subsequent operation based on the image classification result. The media file processing apparatus may be a terminal, for example, a mobile phone, a tablet computer, a notebook computer, an augmented reality (augmented reality, AR) device, a virtual reality (virtual reality, VR) device, or a vehicle-mounted terminal, or may be a server.

For example, the media file is text data. The media file processing method provided in embodiments of this application can be applied to a text recognition scenario. For example, a user uses the mobile phone to perform an operation of translating the text data, or perform an operation of converting the text data into binary data that can be recognized by a machine.

In some embodiments, the media file processing apparatus provided in embodiments of this application may be a chip or a chip system. For example, the chip is a system on chip (system on a chip, SoC). The SoC may include a processor, a memory, an input/output (input/output, I/O) interface, and the like. The processor may be a single-core processor or a multi-core processor. After loading data and an application in the memory, the processor may process the data, for example, perform a matrix multiplication operation in this application.

The following describes in detail a procedure of the media file processing method that is provided in an embodiment of this application and that is applied to the foregoing scenario.

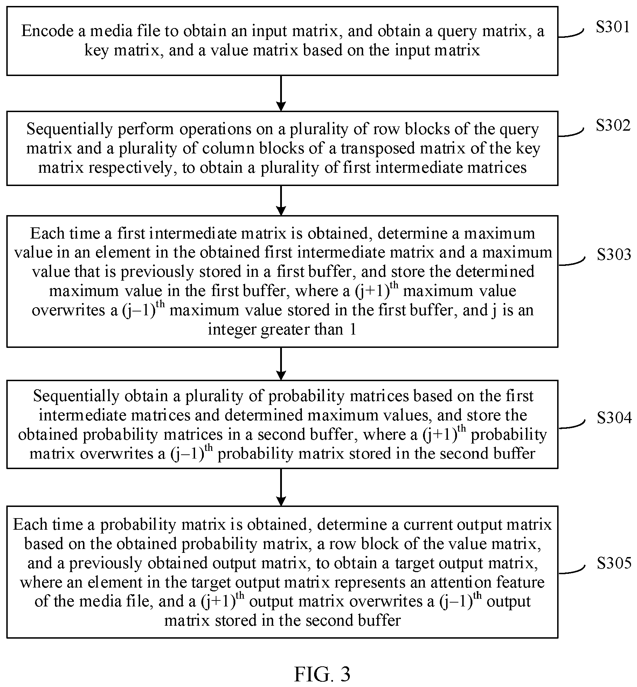

An embodiment of this application provides a media file processing method. As shown in FIG. 3, FIG. 3 is a flowchart of the media file processing method according to an embodiment of this application. The method may include S301 to S305.

S301: Encode a media file to obtain an input matrix, and obtain a query matrix, a key matrix, and a value matrix based on the input matrix.

For example, the media file is text data. The text data is encoded to obtain the input matrix. If a token of the text data is n, and a feature dimension of each token is d, a quantity of rows of the input matrix is n, and a quantity of columns of the input matrix is d, where each row of the input matrix may be understood as a word. The input matrix may be separately input into three linear layers to obtain the query matrix, the key matrix, and the value matrix. Each linear layer may correspond to one weight matrix. The input matrix may be separately input into the three linear layers for linear transformation, to obtain the query matrix, the key matrix, and the value matrix. Specifically, the input matrix may be separately multiplied by transposed matrices of three weight matrices (W_{q}, Wₖ, and Wᵥ), to obtain the query matrix, the key matrix, and the value matrix, and W_{q}, Wₖ, and Wᵥ are parameter matrices that can be trained. In this case, each row in the obtained query matrix, key matrix, and value matrix represents a word, and each column in the query matrix, key matrix, and value matrix represents a quantity of words.

S302: Sequentially perform operations on a plurality of row blocks of the query matrix and a plurality of column blocks of a transposed matrix of the key matrix respectively, to obtain a plurality of first intermediate matrices.

For example, a media file processing apparatus may perform a matrix multiplication operation on a row block of the query matrix and a (j+1)^{th} column block of the transposed matrix of the key matrix, to obtain a (j+1)^{th} first intermediate matrix. In addition, a j^{th} first intermediate matrix may also be obtained based on a row block of the query matrix and a j^{th} column block of the transposed matrix of the key matrix. In other words, the media file processing apparatus performs block-wise computation on the query matrix and the transposed matrix of the key matrix. A row block of the query matrix is any row block in the query matrix, and is represented by "i" in a subsequent embodiment, where i is an integer greater than or equal to 1.

S303: Each time a first intermediate matrix is obtained, determine a maximum value between an element in the obtained first intermediate matrix and a maximum value that is previously stored in a first buffer, and store the determined maximum value in the first buffer, where a (j+1)^{th} maximum value overwrites a (j-1)^{th} maximum value stored in the first buffer, and j is an integer greater than 1.

For example, compared with the external memory mentioned above, the first buffer may be a buffer with a higher access rate but a smaller storage space. That is, reading data from the first buffer is faster than reading data from the external memory, but a storage space of the first buffer is smaller than a storage space of the external memory. The first buffer may be used to store a maximum value in elements. To reduce storage pressure of the first buffer, the first buffer may store only two maximum values at the same time. For example, the first buffer may store both a j^{th} maximum value and the (j+1)^{th} maximum value. When the (j+1)^{th} maximum value is stored, the (j+1)^{th} maximum value may be used to overwrite the (j-1)^{th} maximum value.

For example, the j^{th} maximum value may be stored in the first buffer, and the j^{th} maximum value may be denoted as max(j), where max(j) is a vector, and a quantity of elements in max(j) is the same as a quantity of rows in the j^{th} first intermediate matrix. Specifically, determining a maximum value between an element in a first row of a (j+1)^{th} first intermediate matrix and a first element in max(j) is used as an example. The (j+1)^{th} maximum value may be denoted as max(j+1). If all elements in the first row of the (j+1)^{th} first intermediate matrix are less than or equal to the first element in max(j), the first element in max(j) is used as a first element in max(j+1). If at least one element in elements in the first row of the (j+1)^{th} first intermediate matrix is greater than or equal to the first element in max(j), a largest element in the elements in the first row of the (j+1)^{th} first intermediate matrix is used as a first element in max(j+1). Therefore, max(j+1) may be obtained by traversing elements in each row of the (j+1)^{th} first intermediate matrix, and max(j+1) overwrites max(j-1) stored in the first buffer.

S304: Sequentially obtain a plurality of probability matrices based on the first intermediate matrices and determined maximum values, and store the obtained probability matrices in a second buffer, where a (j+1)^{th} probability matrix overwrites a (j-1)^{th} probability matrix stored in the second buffer.

For example, after new max(j+1) is obtained, a difference between an element in the (j+1)^{th} first intermediate matrix and max(j+1) is separately computed, an operation with e as a base and the difference as an exponent is separately computed, to obtain the (j+1)^{th} probability matrix, and the (j+1)^{th} probability matrix overwrites the (j-1)^{th} probability matrix stored in the second buffer. Specifically, it is assumed that the (j+1)^{th} first intermediate matrix is represented by QK^{T}(i, j+1), and the (j+1)^{th} probability matrix is represented by A(i, j+1). In this case, A(i, j+1)=exp(QK^{T}(i, j+1)-max(j+1)), where i represents a row block of the query matrix, and i is an integer greater than or equal to 1.

For example, compared with the external memory mentioned above, the second buffer may be a buffer with a higher access rate but a smaller storage space. Specifically, the second buffer may be a static random access memory (static random access memory, SRAM). That is, reading data from the second buffer is faster than reading data from the external memory, but a storage space of the second buffer is smaller than a storage space of the external memory. Because the probability matrix in embodiments of this application is obtained by performing block-wise computation on the query matrix and the key matrix, and the (j+1)^{th} probability matrix overwrites the (j-1)^{th} probability matrix. Therefore, a storage space required by the probability matrix is relatively small. In this way, the probability matrix may be stored in the second buffer, thereby improving memory access efficiency.

S305: Each time a probability matrix is obtained, determine a current output matrix based on the obtained probability matrix, row blocks of the value matrix, and a previously obtained output matrix, to obtain a target output matrix, where an element in the target output matrix represents an attention feature of the media file, and a (j+1)^{th} output matrix overwrites a (j-1)^{th} output matrix stored in the second buffer.

For example, a j^{th} output matrix may be obtained based on a j^{th} probability matrix, a j^{th} row block of the value matrix, and the (j-1)^{th} output matrix. Each output matrix may be understood as an intermediate result, and each output matrix may be overwritten by a subsequent output matrix, so that a storage space may be reduced. Therefore, memory access overheads in a process of computation at an attention layer can be reduced, and performance is improved.

For ease of understanding, the following first describes the media file processing apparatus to which the media file processing method is applied according to an embodiment of this application.

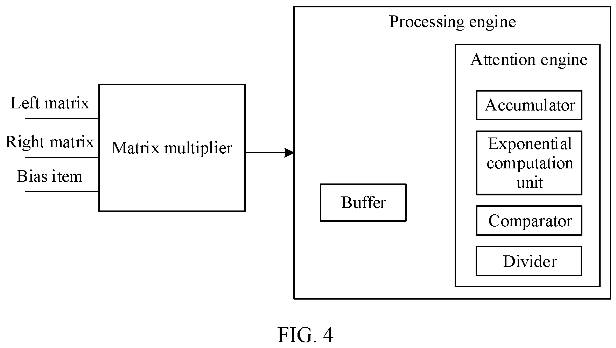

In a possible implementation, as shown in FIG. 4, FIG. 4 is a diagram of a structure of the media file processing apparatus according to an embodiment of this application. The media file processing apparatus may include a matrix multiplier and a processing engine. An input of the matrix multiplier may be a left matrix, a right matrix, and a bias item. In an example, the left matrix may be a query matrix, and the right matrix may be a key matrix. The matrix multiplier may perform a matrix multiplication operation on the input left matrix and the right matrix. The processing engine may include a buffer and an attention engine (attention engine). The attention engine may include an accumulator, an exponential computation unit, a comparator, and a divider. In an example, the divider may also be replaced with a multiplier.

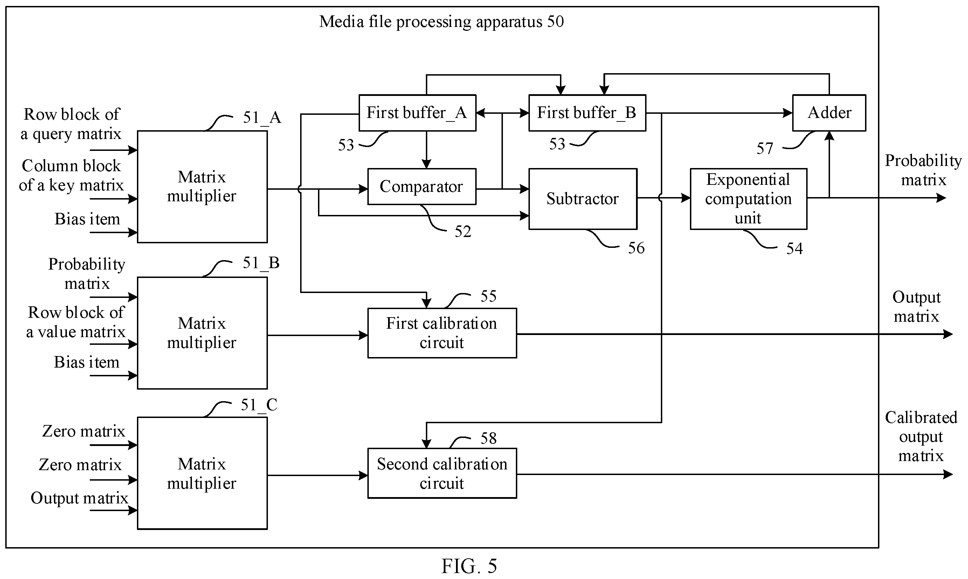

In some embodiments, based on the media file processing apparatus shown in FIG. 4, FIG. 5 is a diagram of a circuit structure of the media file processing apparatus. As shown in FIG. 5, the media file processing apparatus 50 may include a matrix multiplier 51, a comparator 52, a first buffer 53, an exponential computation unit 54, and a first calibration circuit 55. In addition, the apparatus 50 for processing a media file may further include a subtractor 56, an adder 57, and a second calibration circuit 58.

Specifically, FIG. 5 shows a first buffer_A and a first buffer_B. In a possible implementation, the first buffer_A and the first buffer_B may be two storage spaces in a same buffer, or the first buffer_A and the first buffer_B may be two buffers. The first buffer_A may be used to store a maximum value determined in on-the-fly softmax processing, the first buffer_A may also be referred to as a "max buffer", the first buffer_B may be used to store an accumulation matrix determined in on-the-fly softmax processing, and the first buffer_B may also be referred to as a "sum_buffer".

For example, FIG. 5 shows a matrix multiplier 51_A, a matrix multiplier 51_B, and a matrix multiplier 51_C. The matrix multiplier 51_A, the matrix multiplier 51_B, and the matrix multiplier 51_C may be a same matrix multiplier, and the matrix multipliers may perform, based on different inputs, matrix multiplication operations through time division multiplexing. Specifically, an input of the matrix multiplier 51_A may be a row block of the query matrix, a column block of the key matrix, and the bias item, an input of the matrix multiplier 51_B may be a probability matrix, a row block of the value matrix, and the bias item, and an input of the matrix multiplier 51_C may be a zero matrix, a zero matrix, and an output matrix.

For example, the comparator 52 may obtain a maximum value in a previous step from the first buffer_A, which is represented by max(j), compare an element in a first intermediate matrix with max(j), determine a maximum value in a current step, which is represented by max(j+1), and overwrite, with max(j+1), max(j-1) stored in the first buffer_A, where max(j-1) is a maximum value in a previous step of the previous step. In other words, the first buffer simultaneously stores the maximum values determined in the two steps, and the first buffer may be a buffer with a high rate.

For example, the subtractor 56 may compute a difference between the element in the first intermediate matrix and the maximum value max(j+1) in the current step. The exponential computation unit 54 may compute an operation with e as a base and with the difference as an exponent. The adder 57 may obtain an accumulation matrix in the previous step from the first buffer_B, which is represented by d(j), perform an addition operation on d(j) obtained after a calibration operation and an output of the exponential computation unit 54 to obtain an accumulation matrix in the current step, which is represented by d(j+1), and overwrites, with d(j+1), d(j) stored in the first buffer_B. The first calibration circuit 55 may calibrate, based on the j^{th} maximum value and the (j+1)^{th} maximum value, a sum of a (j+1)^{th} second intermediate matrix and the j^{th} output matrix, to obtain the (j+1)^{th} output matrix. The second calibration circuit 58 may obtain an accumulation matrix in a last step from the second buffer_B, to calibrate an output matrix to obtain a calibrated output matrix.

It may be understood that, for a specific implementation of each circuit of the media file processing apparatus, refer to the following descriptions.

With reference to the circuit structure of the media file processing apparatus shown in FIG. 5, the following further describes the media file processing method provided in embodiments of this application.

Optionally, S302 may include: performing a matrix multiplication operation on the probability matrix and the row blocks of the value matrix to obtain a second intermediate matrix, and obtaining a current output matrix based on the second intermediate matrix, a currently determined maximum value, a previously determined maximum value, and a previously obtained output matrix.

For example, the media file processing apparatus may perform a matrix multiplication operation on the (j+1)^{th} probability matrix and a (j+1)^{th} row block of the value matrix by using the matrix multiplier, to obtain the (j+1)^{th} second intermediate matrix.

For example, the j^{th} maximum value and the (j+1)^{th} maximum value are stored in the first buffer, the j^{th} maximum value may be denoted as max(j), and the (j+1)^{th} maximum value may be denoted as max(j+1). The media file processing apparatus may obtain max(j+1) and max(j) from the first buffer by using the first calibration circuit, and compute an exponent operation with e as a base and max(j)-max(j-1) as an exponent, that is, compute exp(max(j)-max(j+1)). It is assumed that the (j+1)^{th} second intermediate matrix is represented by O(i, j+1), and the (j+1)^{th} output matrix is represented by Z(i, j+1). In this case, Z(i, j+1)=(O(i, j+1)+Z(i, j))/exp(max(j)-max(j+1)).

Optionally, the media file processing method further includes: each time a probability matrix is obtained, obtaining a current accumulation matrix based on the obtained probability matrix and a previously obtained accumulation matrix, and calibrating the current accumulation matrix to obtain a current calibrated accumulation matrix.

For example, the (j+1)^{th} accumulation matrix is a sum of a value obtained by performing summation on the (j+1)^{th} probability matrix and a calibrated j^{th} accumulation matrix. Before accumulation is performed on the j^{th} accumulation matrix, the j^{th} accumulation matrix needs to be calibrated. It is assumed that the (j+1)^{th} accumulation matrix is represented by d(j+1), the j^{th} accumulation matrix is represented by d(j), and the calibrated j^{th} accumulation matrix may be represented by d(j)*exp(max(j)-max(j+1)). In this case, d(j+1)=sum(A(i, j+1))+d(j)*exp(max(j)-max(j+1)), where sum represents performing summation on elements in each row of A(i, j+1).

Optionally, the media file processing method further includes: when a last output matrix is obtained, calibrating the last output matrix based on a last accumulation matrix, to obtain the target output matrix.

For example, it is assumed that the transposed matrix of the key matrix includes n column blocks, the last accumulation matrix may be represented as an n^{th} accumulation matrix, and the last output matrix may be represented as an n^{th} output matrix. The n^{th} accumulation matrix may be represented as d(n), and the n^{th} output matrix may be represented as O(i, n). O(i, n) may be calibrated based on d(n), and calibrated Z(i, n)=O(i, n)/d(n).

For example, Z (i, n) is an element in an i^{th} row of the target output matrix, and an element in another row of the target output matrix may be obtained by traversing and computing a next row block of the query matrix, each column block of the transposed matrix of the key matrix, and each row block of the value matrix, thereby completing the process of computation at the attention layer.

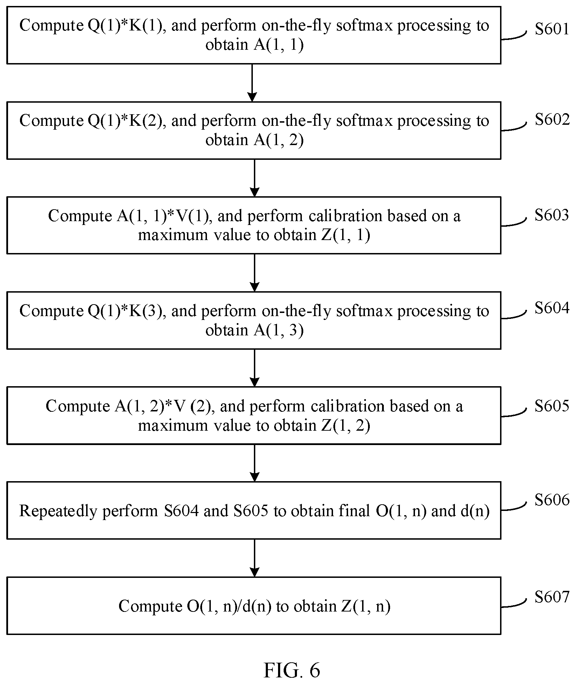

In a possible example, an example in which i=1 and j=1 is used to describe the process of computation at the attention layer. The query matrix is represented by "Q", the key matrix is represented by "K", the value matrix is represented by "V", the probability matrix is represented by "A", the first intermediate matrix is represented by "QK^{T}", the second intermediate matrix is represented by "O", and the output matrix is represented by "Z". A media file processing procedure is shown in FIG. 6. FIG. 6 is a flowchart of another media file processing method according to an embodiment of this application. The method includes S601 to S607.

S601: Compute Q(1)*K(1), and perform on-the-fly softmax processing to obtain A(1, 1).

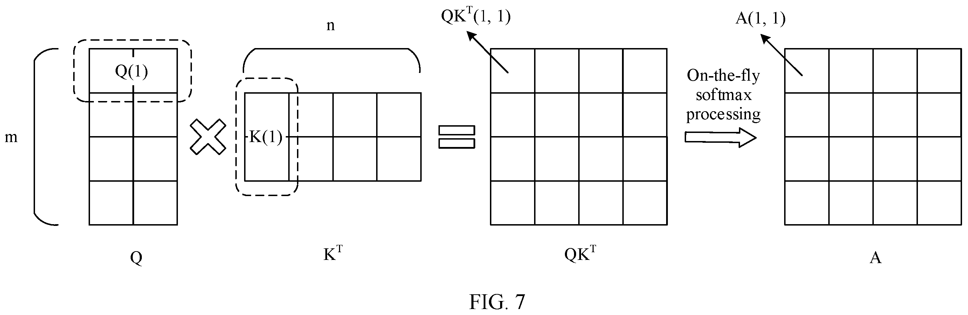

For example, as shown in FIG. 7, the query matrix may include m row blocks, and the transposed matrix of the key matrix may include n column blocks. A matrix multiplication operation is performed on a first row block Q(1) of the query matrix and a first column block K(1) of the key matrix, to obtain a first intermediate matrix QK^{T}(1, 1).

For example, the step of on-the-fly softmax processing may include: In this case, j=1, and elements in max(j-1) in the first buffer are all negative infinity, that is, elements in each row of the first intermediate matrix QK^{T}(1, 1) are greater than corresponding elements in max(j-1). A maximum value max(1) may be determined from the first intermediate matrix QK^{T}(1, 1). In this case, A(1, 1)=exp(QK^{T}(1, 1)-max(1)), and A(1, 1) is stored in the second buffer.

For example, when j=1, and in this case, d(j-1)=0, the accumulation matrix d(1)=sum(A(1, 1)), and d(1) is stored in the first buffer.

S602: Compute Q(1)*K(2), and perform on-the-fly softmax processing to obtain A (1, 2).

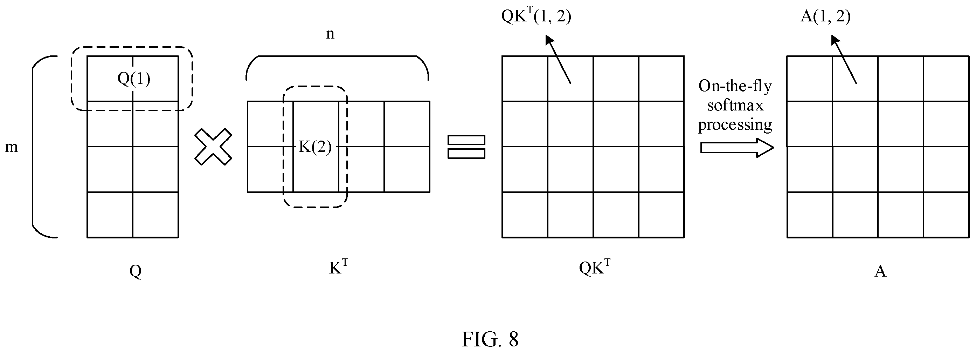

For example, as shown in FIG. 8, a matrix multiplication operation is performed on the first row block Q(1) of the query matrix and a first column block K(2) of the key matrix, to obtain a first intermediate matrix QK^{T}(1, 2).

For example, the step of on-the-fly softmax processing may include: In this case, j=2, and max(1) is stored in the first buffer. Specifically, a maximum value may be determined from elements in a first row of the first intermediate matrix QK^{T}(1, 2). If the maximum value is greater than or equal to a first element in max(1), the maximum value is used as a first element in max(2). If the maximum value is less than a first element in max(1), the first element in max(1) is used as a first element in max(2). In this way, elements in each row of the first intermediate matrix QK^{T}(1, 2) may be traversed to obtain all elements in max(2), and max(2) is stored in the first buffer. In this case, max(1) and max(2) are stored in the first buffer. A(1, 2)=exp(QK^{T}(1, 2)-max(2)), and A(1, 2) is stored in the second buffer.

For example, when j=2, an accumulation matrix d(2)=sum(A(1, 2))+d(1)*exp(max(1)-max(2)), and d(2) overwrites d(1) stored in the first buffer.

S603: Compute A(1, 1)*V(1), and perform calibration based on the maximum value to obtain Z(1, 1).

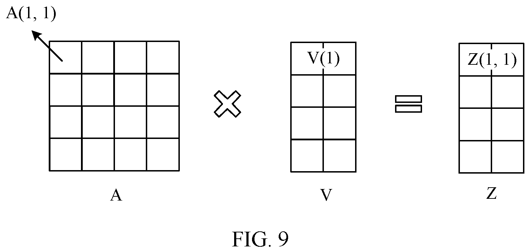

For example, as shown in FIG. 9, a matrix multiplication operation is performed on a probability matrix A(1, 1) and a first row block V(1) of the value matrix, to obtain a second intermediate matrix O(1, 1).

For example, a procedure for calibrating the second intermediate matrix O(1, 1) may be represented as: Z(1, 1)=O(1, 1)/exp(max(2)-max(1)). In this case, Z(1, 1) is stored in the second buffer.

S604: Compute Q(1)*K(3), and perform on-the-fly softmax processing to obtain A(1, 3).

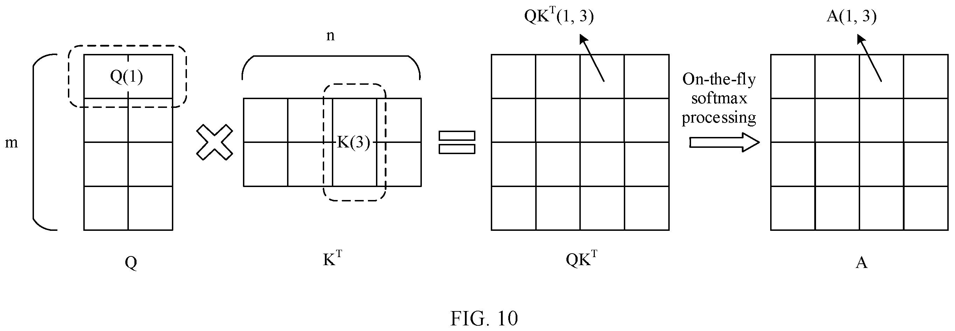

For example, as shown in FIG. 10, a matrix multiplication operation is performed on the first row block Q(1) of the query matrix and a first column block K(3) of the key matrix, to obtain a first intermediate matrix QK^{T}(1, 3).

For example, the step of on-the-fly softmax processing may include: In this case, j=3, and max(2) is stored in the first buffer. Specifically, a maximum value may be determined from elements in a first row of the first intermediate matrix QK^{T}(1, 3). If the maximum value is greater than or equal to the first element in max(2), the maximum value is used as a first element in max(3). If the maximum value is less than a first element in max(2), the first element in max(2) is used as a first element in max(3). In this way, elements in each row of the first intermediate matrix QK^{T}(1, 3) may be traversed to obtain all elements in max(3), and max(3) overwrites max(1) stored in the first buffer. A(1, 3)=exp(QK^{T}(1, 3)-max(3)), and A(1, 3) overwrites A(1, 1) stored in the second buffer.

For example, when j=3, an accumulation matrix d(3)=sum(A(1, 3))+d(2)*exp(max(2)-max(3)), and d(3) overwrites d(2) stored in the first buffer.

S605: Compute A(1, 2)*V(2), and perform calibration based on the maximum value to obtain Z(1, 2).

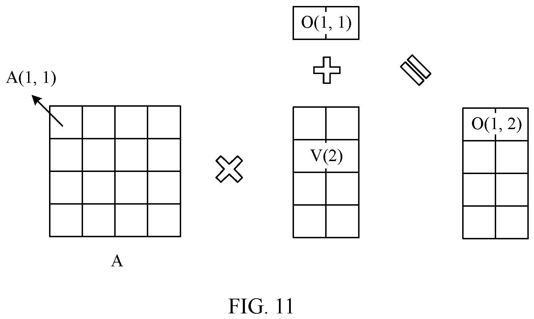

For example, as shown in FIG. 11, a matrix multiplication operation is performed on a probability matrix A(1, 2) and a first row block V(2) of the value matrix, to obtain a second intermediate matrix O(1, 2).

For example, a procedure for calibrating the second intermediate matrix O(1, 2) may be represented as: Z(1, 2)=(O(1, 2)+Z(1, 1))/exp(max(3)-max(2)). In this case, Z(1, 2) is stored in the second buffer.

S604 and S605 are repeatedly performed to obtain final O(1, n) and d(n).

S606: Repeatedly perform S604 and S605 to obtain final O(1, n) and d(n).

S607: Compute O(1, n)/d(n) to obtain Z(1, n).

It can be learned that, in this embodiment of this application, the matrix multiplication operation of the QK and the matrix multiplication operation of the AV arranged in a staggered manner can adapt to the process of computation at the attention layer, thereby ensuring computation accuracy.

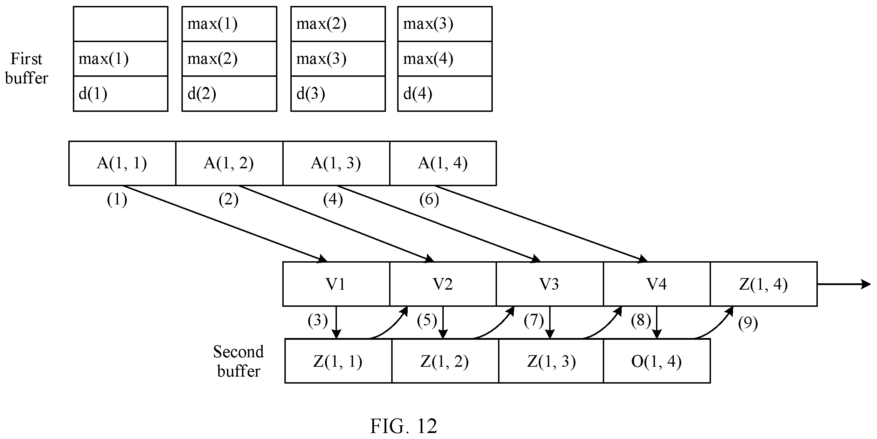

As shown in FIG. 12, FIG. 12 is another flowchart of computation at the attention layer according to an embodiment of this application. A procedure in the flowchart corresponds to the procedure in FIG. 7. For example, (1) corresponds to S601, that is, (1) is a step of obtaining the probability matrix A(1, 1). In this case, max(1) and d(1) are stored in the first buffer. (2) corresponds to S602, that is, (2) is a step of obtaining the probability matrix A(1, 2). In this case, max(1), max(2), and d(2) are stored in the first buffer. (3) corresponds to S603, that is, (3) is a step of obtaining the output matrix Z(1, 1). In this case, Z(1, 1) is stored in the second buffer. (4) corresponds to S604, that is, (4) is a step of obtaining the probability matrix A(1, 3). In this case, max(2), max(3), and d(3) are stored in the first buffer. (5) corresponds to S605, that is, (5) is a step of obtaining the output matrix Z(1, 2). In this case, Z(1, 2) is stored in the second buffer. In addition, (6) is a step of obtaining the probability matrix A(1, 4). In this case, max(3), max(4), and d(4) are stored in the first buffer. (7) is a step of obtaining the output matrix Z(1, 3). In this case, Z(1, 3) is stored in the second buffer. (8) is a step of obtaining the output matrix O(1, 4). In this case, O(1, 4) is stored in the second buffer. (9) is a process of calibrating the output matrix O(1, 4) to obtain the calibrated output matrix Z(1, 4).

It may be understood that, if an amount of data stored in the first buffer and the second buffer is small, a memory with a higher access rate, for example, an SRAM, may be used, so that memory access overheads can be reduced.

Optionally, S301 may further include: performing matrix multiplication operations on the row blocks of the query matrix and the column blocks of the transposed matrix of the key matrix to obtain third intermediate matrices, and performing numerical conversion on elements in the third intermediate matrices to obtain the first intermediate matrices. Elements in the first intermediate matrices are fixed-point numbers.

For example, numerical conversion is performed on the elements in the third intermediate matrices to obtain the first intermediate matrices, so that computation at the attention layer can be converted from a floating-point domain to a fixed-point domain, thereby further reducing a circuit area and power consumption.

The following describes only the numerical conversion part. Details of other parts are not described again.

For example, because *e^{x}* = 2^{*x*/*ln*2}, when an exponential operation is performed, *e^{x}* may be replaced with 2^{*x*/*ln*2} to perform computation, where 1/ln2≈1.4427.

It is assumed that y=x/ln2 is represented in a form of a and b, where a is an integral part of y, and b is a fractional part of y. In this case, 2^{*x*/*ln*2} = 2*^{y}* = 2*^{a}* * 2*^{b}*. Because a is an integer, 2*^{a}* may be represented by shift. In addition, b may be discarded when softmax is quantized. In this case, *e^{x}* may be approximately represented as 2^{(*Round*(1.4427*x*))}, where Round indicates that 1.4427x is rounded off based on a specified fractional part. That is, a floating-point number is converted into a fixed-point number.

It may be understood that, the operation of computing exp(max(j)-max(j+1)) mentioned above may be replaced with a left shift operation on max(j)-max(j+1). In addition, when max(j+1) is determined, max(j+1) is a maximum value between an element in a current first intermediate matrix and max(j). Therefore, max(j)≤max(j+1) is always true, and a right shift operation on exp(max(j)-max(j+1)).

It may be understood that, because block-wise computation and on-the-fly softmax processing are used, memory access overheads are reduced. In embodiments of this application, 16 bits (bit) may be used for each of the input matrix, the output matrix, and the intermediate matrix, thereby increasing a quantization bit width, that is, improving quantization precision of a model.

An embodiment of this application provides a chip system. The chip system includes a second buffer and the media file processing apparatus according to the second aspect. The second buffer is configured to store the probability matrices and output matrices. The (j+1)^{th} probability matrix overwrites the (j-1)^{th} probability matrix, the (j+1)^{th} output matrix overwrites the (j-1)^{th} output matrix, and j is an integer greater than 1.

An embodiment of this application further provides an electronic device, including one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the media file processing method in the foregoing embodiments.

An embodiment of this application further provides a computer storage medium. The computer storage medium stores computer instructions. When the computer instructions are run on an electronic device, the electronic device is enabled to perform the foregoing related method steps to implement the media file processing method in the foregoing embodiments.

An embodiment of this application further provides a computer program product. When the computer program product runs on a computer, the computer is enabled to perform the foregoing related steps, to implement the media file processing method performed by the electronic device in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the media file processing method performed by the electronic device in the foregoing method embodiments.

The electronic device, the computer storage medium, the computer program product, or the chip provided in embodiments is configured to perform the corresponding method provided above. Therefore, for beneficial effects that can be achieved, refer to the beneficial effects in the corresponding method provided above. Details are not described herein again.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed across different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A media file processing method, wherein the method comprises:
encoding a media file to obtain an input matrix, and obtaining a query matrix, a key matrix, and a value matrix based on the input matrix;
sequentially performing operations on a plurality of row blocks of the query matrix and a plurality of column blocks of a transposed matrix of the key matrix respectively, to obtain a plurality of first intermediate matrices;
each time a first intermediate matrix is obtained, determining a maximum value between an element in the obtained first intermediate matrix and a maximum value that is previously stored in a first buffer, and storing the determined maximum value in the first buffer, wherein a (j+1)^{th} maximum value overwrites a (j-1)^{th} maximum value stored in the first buffer, and j is an integer greater than 1;
sequentially obtaining a plurality of probability matrices based on the first intermediate matrices and determined maximum values, and storing the obtained probability matrices in a second buffer, wherein a (j+1)^{th} probability matrix overwrites a (j-1)^{th} probability matrix stored in the second buffer; and
each time a probability matrix is obtained, determining a current output matrix based on the obtained probability matrix, a row block of the value matrix, and a previously obtained output matrix, to obtain a target output matrix, wherein an element in the target output matrix represents an attention feature of the media file, and a (j+1)^{th} output matrix overwrites a (j-1)^{th} output matrix stored in the second buffer.

2. The method according to claim 1, wherein determining the current output matrix based on the obtained probability matrix, the row block of the value matrix, and the previously obtained output matrix comprises:
performing a matrix multiplication operation on the obtained probability matrix and the row block of the value matrix, to obtain a second intermediate matrix; and
obtaining the current output matrix based on the second intermediate matrix, a currently determined maximum value, a previously determined maximum value, and the previously obtained output matrix.

3. The method according to claim 2, wherein the method further comprises:
each time a probability matrix is obtained, obtaining a current accumulation matrix based on the obtained probability matrix and a previously obtained accumulation matrix; and
calibrating the current accumulation matrix to obtain a current calibrated accumulation matrix.

4. The method according to claim 3, wherein the method further comprises:
when a last output matrix is obtained, calibrating the last output matrix based on a last accumulation matrix, to obtain the target output matrix.

5. The method according to claim 1, wherein sequentially performing the operations on the plurality of row blocks of the query matrix and the plurality of column blocks of the transposed matrix of the key matrix respectively, to obtain the plurality of first intermediate matrices comprises:
performing matrix multiplication operations on the row blocks of the query matrix and the column blocks of the transposed matrix of the key matrix, to obtain third intermediate matrices; and
performing numerical conversion on elements in the third intermediate matrices to obtain the first intermediate matrices, wherein elements in the first intermediate matrices are fixed-point numbers.

6. The method according to any one of claims 1 to 5, wherein
a quantity of row blocks of the query matrix, a quantity of column blocks of the transposed matrix of the key matrix, and a quantity of row blocks of the value matrix are the same.

7. A media file processing apparatus, comprising: a matrix multiplier, a comparator, a first buffer, an exponential computation unit, and a first calibration circuit, wherein
the matrix multiplier is configured to: encode a media file to obtain an input matrix, and obtain a query matrix, a key matrix, and a value matrix based on the input matrix;
the matrix multiplier is further configured to sequentially perform operations on a plurality of row blocks of the query matrix and a plurality of column blocks of a transposed matrix of the key matrix respectively, to obtain a plurality of first intermediate matrices;
the comparator is configured to: each time a first intermediate matrix is obtained, determine a maximum value between an element in the obtained first intermediate matrix and a maximum value that is previously stored in a first buffer, and store the determined maximum value in the first buffer, wherein a (j+1)^{th} maximum value overwrites a (j-1)^{th} maximum value stored in the first buffer, and j is an integer greater than 1;
the exponential computation unit is configured to: sequentially obtain a plurality of probability matrices based on the first intermediate matrices and determined maximum values, and store the obtained probability matrices in a second buffer, wherein a (j+1)^{th} probability matrix overwrites a (j-1)^{th} probability matrix stored in the second buffer; and
the first calibration circuit is configured to: each time a probability matrix is obtained, determine a current output matrix based on the obtained probability matrix, a row block of the value matrix, and a previously obtained output matrix, to obtain a target output matrix, wherein an element in the target output matrix represents an attention feature of the media file, and a (j+1)^{th} output matrix overwrites a (j-1)^{th} output matrix stored in the second buffer.

8. The apparatus according to claim 7, wherein the first calibration circuit is specifically configured to:
perform a matrix multiplication operation on the obtained probability matrix and the row block of the value matrix, to obtain a second intermediate matrix; and
obtain the current output matrix based on the second intermediate matrix, a currently determined maximum value, a previously determined maximum value, and the previously obtained output matrix.

9. The apparatus according to claim 8, wherein the apparatus further comprises an adder; and
the adder is configured to: each time a probability matrix is obtained, obtain a current accumulation matrix based on the obtained probability matrix and a previously obtained accumulation matrix; and
calibrate the current accumulation matrix to obtain a current calibrated accumulation matrix.

10. The apparatus according to claim 9, wherein the apparatus further comprises a second calibration circuit; and
the second calibration circuit is configured to: when a last output matrix is obtained, calibrate the last output matrix based on a last accumulation matrix, to obtain the target output matrix.

11. The apparatus according to claim 7, wherein the matrix multiplier is specifically configured to:
perform matrix multiplication operations on the row blocks of the query matrix and the column blocks of the transposed matrix of the key matrix, to obtain third intermediate matrices; and
perform numerical conversion on elements in the third intermediate matrices to obtain the first intermediate matrices, wherein elements in the first intermediate matrices are fixed-point numbers.

12. The apparatus according to any one of claims 7 to 11, wherein
a quantity of row blocks of the query matrix, a quantity of column blocks of the transposed matrix of the key matrix, and a quantity of row blocks of the value matrix are the same.

13. A chip system, comprising a second buffer and the media file processing apparatus according to any one of claims 7 to 12, wherein
the second buffer is configured to store the probability matrices and output matrices, wherein the (j+1)^{th} probability matrix overwrites the (j-1)^{th} probability matrix, the (j+1)^{th} output matrix overwrites the (j-1)^{th} output matrix, and j is an integer greater than 1.

14. An electronic device, comprising a processor and a memory, wherein the memory is coupled to the processor, the memory is configured to store computer instructions, and the processor is configured to execute the computer instructions to implement the method according to any one of claims 1 to 6.

15. A computer-readable storage medium, comprising computer instructions, wherein when the computer instructions are run on an electronic device, the electronic device is enabled to perform the method according to any one of claims 1 to 6.
